# EUROPÄISCHE PATENTSCHRIFT

(11) **EP 1 780 516 B1**
(45) Veröffentlichungstag und Bekanntmachung des Hinweises auf die Patenterteilung: **13.03.2019**
(21) Anmeldenummer: 06017000.8
(22) Anmeldetag: 16.08.2006
(51) Int. Cl.: G01D 9/00

(54) **Verfahren zum Aufbau eines Sensornetzwerkes**
Method for creating a sensor network
Procédé pour établir un réseau à capteurs

(30) Priorität: 26.10.2005 DE 102005051562
(43) Veröffentlichungstag der Anmeldung: 02.05.2007
(73) Patentinhaber: ista International GmbH, 45131 Essen (DE)
(72) Erfinder: Bley, Bert, 45131 Essen (DE); Gronauer, Manfred, 45289 Essen (DE); Kauffmann, Bernd, 59427 Unna (DE); Rische, Thorsten, 44879 Bochum (DE)
(74) Vertreter: Cohausz, Helge B.

(56) Entgegenhaltungen:
- EP-A1- 1 385 300
- EP-A2- 1 513 288
- WO-A2-03/015452
- US-A1- 2003 078 062
- US-A1- 2003 079 003

## Beschreibung

Die Erfindung betrifft ein Verfahren zum Aufbau eines Sensornetzwerkes mit mehreren Sensorknoten, wobei Sensorknoten zur Übermittlung von Sensordaten an einen zentralen Empfangsknoten miteinander in Verbindung treten können und wobei in jedem Sensorknoten Informationen, insbesondere Zeitinformationen, gespeichert sind von benachbarten im Empfangsgebiet eines Sensorknotens liegenden anderen Sensorknoten, anhand denen ein Sensorknoten bestimmt, wann er mit einem anderen Sensorknoten in Verbindung tritt.

Derartige Sensornetzwerke werden z.B. eingesetzt im Bereich der Verbrauchsdatenerfassung, z.B. bei der Erfassung von Verbrauchsdaten über Stromverbrauch, Gasverbrauch, Heizwärmeverbrauch, Wasserverbrauch oder sonstiger Ressourcen, die von einem Anbieter an einen Empfänger in Rechnung gestellt werden.

Um zu vermeiden, dass Ablesepersonal in die einzelnen verschiedenen Wohnungen kommen muss, um Verbrauchszähler separat vor Ort abzulesen, ist es im Stand der Technik bekannt, die Geräte zur Verbrauchsdatenerfassung in ein Netzwerk einzugliedern, in welchem diese Geräte miteinander kommunizieren können. Da es sich bei derartigen Geräten zur Verbrauchsdatenerfassung üblicherweise um Geräte mit Sensoren handelt, werden diese im Rahmen des Netzwerkverbundes auch als Sensorknoten bezeichnet.

Üblicherweise werden bei derartigen Sensornetzwerken die Verbrauchsdaten, die bei den in dem Netzwerk angeordneten Sensorknoten erfasst werden, mittels einer Weiterleitung über die einzelnen Sensorknoten zu einer zentralen Erfassungsstelle geleitet, wo die einzelnen Verbrauchsdaten gesammelt und sodann für die Abrechnung zur Verfügung gestellt werden können. Beispielsweise kann Ablesepersonal die Daten an der zentralen Erfassungsstelle abholen, gegebenenfalls ist es auch möglich, die zentral zusammengefassten Daten per Datenfernübertragung weiterzuleiten.

In einem derartigen Sensornetzwerk mit einer Vielzahl von Sensorknoten ist es bekannt, die einzelnen Daten über die verschiedenen Sensorknoten weiterzuleiten, was bedeutet, dass ein Sensorknoten sowohl als sendender Sensorknoten als auch als empfangender Sensorknoten arbeiten kann.

Im Beispiel des vorgenannten Standes der Technik kann ein Sensorknoten somit auch eine zentrale Sammelstelle darstellen oder einen beliebigen Sensorknoten des Sensornetzwerkes bilden, über den die Daten weitergeleitet werden.

In derartigen Sensornetzwerken ist es weiterhin bekannt, dass eine Vielzahl von Sensorknoten mit einem anderen Sensorknoten in Verbindung treten möchten, um aufgelaufene Daten über Verbrauchswerte oder gegebenenfalls auch andere Daten, wie beispielsweise Statusmeldungen oder Fehlermeldungen, weiterzuleiten. Hierbei kann eine Wegoptimierung bezüglich des Transportwegs der Daten durch die einzelnen Sensorknoten anhand vorgegebener Kriterien gewählt werden, wobei es vorkommen kann, dass eine Vielzahl von Sensorknoten mit einem bestimmten anderen Sensorknoten kommunizieren möchte, da der Weg über diesen speziellen Sensorknoten als optimal oder zumindest bevorzugt gegenüber anderen Wegen klassifiziert ist.

Im Stand der Technik ist es bekannt, dass sich Sensorknoten für den Datenaustausch mit einem anderen Sensorknoten synchronisieren müssen, um einen Datenaustausch im Anschluss an diese Synchronisation im Rahmen eines vorbestimmten Austauschprotokolls vornehmen zu können.

Das Dokument WO03/015452 offenbart ein Verfahren zum Aufbau eines Sensornetzwerkes gemäß dem Stand der Technik.

Aus energetischen Gründen ist es dabei vorgesehen, dass ein Sensorknoten zunächst wenigstens ein so genanntes Synchronisationstelegramm aussendet, welches anderen Sensorknoten, die ein derartiges Synchronisationstelegramm empfangen, signalisiert, dass dieser Sensorknoten für einen Empfang von Verbrauchsdaten oder sonstiger anderer Daten oder Mitteilungen zur Verfügung steht.

Um ein derartiges Synchronisationstelegramm empfangen zu können, besteht dabei die Notwendigkeit, dass andere Sensorknoten zu dem Zeitpunkt der Aussendung dieses Synchronisationstelegramms in Empfangsbereitschaft stehen, wofür üblicherweise ein empfangender Sensorknoten über die Zeitdauer eines Empfangsfensters seine interne Empfangseinheit aktiviert. Aus energetischen Gründen ist die zeitliche Dauer eines solchen Empfangsfenster begrenzt.

Um demnach einen zeitlichen Überlapp zwischen Aussendung des Synchronisationstelegramms und eines geöffneten Empfangsfensters zu erreichen, ist es bekannt, in den einzelnen Sensorknoten interne Uhren oder Uhrsysteme vorzusehen. In den Sensorknoten kann somit eine Information darüber vorliegen, wann ein bestimmter Sensorknoten wenigstens ein Synchronisationstelegramm sendet und wann ein anderer Sensorknoten sein Empfangsfenster öffnen muss, um ein solches Synchronisationstelegramm zu empfangen.

Nach Aussendung wenigstens eines Synchronisationstelegramms geht üblicherweise dieser sendende Sensorknoten für eine Zeitdauer, welche insbesondere vorbestimmt sein kann, auf Empfang, um sodann innerhalb dieser Zeitdauer Telegramme empfangen zu können, die von umliegenden Sensorknoten ausgesendet werden, welche beispielsweise Daten, z.B. Verbrauchsdaten oder sonstige Informationen an den Sensorknoten weiterleiten möchten, der das wenigstens eine Synchronisationstelegramm gesendet hatte.

Im Rahmen der nachfolgenden weiteren Erfindungsbeschreibung wird unter einem Telegramm, z.B. einem Synchronisationstelegramm, ein abgeschlossenes Paket jeglicher Art von Daten verstanden, die zwischen zwei Knoten des Netzwerkes kommuniziert werden. Dementsprechend kann es sich um Statusdaten, Synchronisationsdaten, Verbrauchsdaten oder sonstigen Daten handeln.

Bei einem bestehenden Sensornetzwerk liegen die vorgenannten Informationen über den zeitlichen Ablauf der Aussendung von Synchronisationstelegrammen und Öffnung von Empfangsfenstern intern in den jeweiligen Sensorknoten vor. Bereitgestellt werden die Informationen z.B. dadurch dass sich ein Sensornetzwerk selbst untersucht, also z.B. einige Sensorknoten eine Vielzahl von Synchronisationstelegrammen aussenden und einige Sensorknoten ihr Empfangsfenster länger als üblich offen halten, um die Wahrscheinlichkeit eines Überlapps von Telegramm und Fenster zu erhöhen. So können die Sensorknoten eines Sensornetzwerkes die nötigen zeitlichen Informationen selbst ermitteln. Diese Art der Ermittlung ist jedoch aufwendig, insbesondere in energetischer Sicht.

Aufgabe der Erfindung ist es, ein Verfahren bereitzustellen, mit dem auf einfache Art und Weise eine ursprüngliche Initialisierung eines Sensornetzwerkes bei Aufbau desselben erfolgen kann, insbesondere um die begrenzten Energiereserven der im Netzwerk vorliegenden Sensorknoten zu schonen.

Diese Aufgabe wird gelöst durch ein Verfahren gemäß Anspruch 1, bei dem anfängliche Informationen in einem Sensorknoten gebildet werden durch Informationen aus einem mobilen Installationsgerät, wobei diese Informationen bei der Installation eines neuen Sensorknotens in diesen übertragen werden. Insbesondere können derartige Informationen in Form einer Tabelle vorliegen. Es ist jedoch im Rahmen der Erfindung auch jegliche andere Art der Organisation derartiger Informationen möglich.

Wesentlicher Kerngedanke bei dem erfindungsgemäßen Verfahren ist es, eine Art der Selbstuntersuchung, wie sie vorangehend zum Stand der Technik beschrieben wurde, zu vermeiden, da diese Selbstuntersuchung energetisch sehr aufwendig ist. Erreicht wird dies dadurch, dass bei dem Aufbau eines Sensornetzwerkes ein Techniker, der diesen Aufbau vornimmt, ein mobiles Installationsgerät mit sich führen kann, wobei in diesem Installationsgerät die nötigen Informationen für eine erste Inbetriebnahme eines Sensorknotens zur Verfügung gestellt werden. So kann diese Information, die in einem Installationsgerät vorliegt, bei der Installation eines neuen Sensorknotens, z.B. per Funk, gegebenenfalls auch per kabelgebundener oder optischer Übertragung, übermittelt werden.

Diese benötigten Informationen sind im Wesentlichen Zeitinformationen für die benötigte vorgenannte Synchronisation zweier Sensorknoten, um diejenige Zeit zu bestimmen, wann einer der Sensorknoten wenigstens ein Synchronisationstelegramm aussendet und wann wenigstens ein anderer Sensorknoten ein Empfangsfenster öffnet, um ein solches Synchronisationstelegramm zu empfangen und um anschließend einen Datenaustausch vorzunehmen. Ein Installationsgerät, welches im Rahmen dieses erfindungsgemäßen Verfahrens eingesetzt werden kann, umfasst somit bevorzugt auch eine interne Uhr bzw. ein Uhrsystem, um einen zeitlichen Abgleich zwischen einem neuen installierten Sensorknoten und allen zuvor im Netzwerk installierten Sensorknoten zu erreichen.

Gemäß des erfindungsgemäßen Verfahrens ist es vorgesehen, dass die Informationen im Installationsgerät, die an einen neu installierten Sensorknoten zu übermitteln sind, automatisch angepasst werden z.B. anhand des Empfangs von Daten, insbesondere von Synchronisationstelegrammen von bereits im Netzwerk installierten Sensorknoten, die sich im Empfangsbereich des Installationsgerätes befinden.

So ist davon auszugehen, dass ein Installationsgerät im Wesentlichen gleiche Empfangseigenschaften aufweist wie ein zu installierender Sensorknoten, so dass diejenigen bereits installierten Sensorknoten, die vom Installationsgerät empfangbar sind, auch von dem Sensorknoten empfangen werden können, der durch einen Monteur neu zu installieren ist. Diejenigen Informationen, z.B. Zeitinformationen, die ein Installationsgerät aufgrund des Empfangs von bereits installierten Sensorknoten von diesen erhält, können somit an einen neu zu installierenden Sensorknoten übermittelt werden, ohne dass dieser in energetisch aufwendiger Weise tätig werden muss, um selbst diese Informationen aus dem Empfang zu generieren.

Die energetisch aufwendige Generierung der nötigen Informationen wird dementsprechend gemäß dem wesentlichen Aspekt der vorliegenden Erfindung durch das Installationsgerät vorgenommen, welches von einem Installateur mitführbar ist. Das Installationsgerät hat demnach im Wesentlichen dieselben Eigenschaften bezüglich Empfang und Aussendung wie ein Sensorknoten und kann einen Spiegel derjenigen Informationen bilden, die für den neu zu installierenden Sensorknoten nötig sind.

Gemäß einer bevorzugten Weiterbildung des erfindungsgemäßen Verfahrens kann es vorgesehen sein, dass in einem neu zu installierenden Sensorknoten, insbesondere in einer Tabelle, wenigstens eine Information über eine Zeitabweichung zwischen den internen Uhren des neuen und wenigstens eines bereits vorhandenen Sensorknotens gespeichert wird. Hierbei kann es bevorzugt vorgesehen sein, dass eine Zeitabweichung ermittelt wird aus einer zeitlichen Differenz der internen Uhr des Installationsgerätes zur internen Uhr wenigstens eines in dessen Empfangsgebiet bereits im Sensornetzwerk vorhandenen Sensorknotens und einer zeitlichen Differenz der internen Uhr des Installationsgerätes zur internen Uhr des neu zu installierenden Sensorknotens, wobei die Zeitabweichung nach deren Ermittlung zumindest in den neuen Sensorknoten übertragen wird.

Aufgrund dieses Vorgehens besteht somit eine Information über den aktuellen Stand der jeweils in zwei betrachteten Sensorknoten vorhandenen Uhren, so dass unter Berücksichtigung dieser Information der neu zu installierende Sensorknoten die Lage seines zu öffnenden Empfangsfensters bestimmen kann, um wenigstens ein Synchronisationstelegramm eines anderen Sensorknotens zu empfangen. Hierbei ist es bevorzugt vorgesehen, dass dem neu zu installierenden Sensorknoten die entsprechend benötigten Informationen zu sämtlichen oder gegebenenfalls auch nur zu ausgewählten Sensorknoten zur Verfügung gestellt werden, die sich im Empfangsgebiet dieses neuen Sensorknotens befinden.

So kann beispielsweise mittels des Installationsgerätes durch Empfang von Synchronisationstelegrammen aller bisheriger Sensorknoten die jeweilige interne Uhrabweichung zu der Uhr des Installationsgerätes bestimmt werden, so dass hierdurch die jeweilige Zeitabweichung zu der Uhr des neuen Sensorknotens ermittelbar und an diesen übertragbar ist.

Somit liegt zumindest eine ausreichende Information vor, um einen unidirektionalen Datenaustausch zwischen diesen berücksichtigten Sensorknoten zu erreichen. Um auch einen bidirektionalen Datenaustausch möglich zu machen, kann es bevorzugt vorgesehen sein, dass diejenigen Informationen, die einem neu zu installierenden Sensorknoten zur Verfügung gestellt werden, auch an diejenigen Sensorknoten übertragen werden, die bereits im Netzwerk installiert sind. Dies kann entweder durch das Installationsgerät erfolgen oder durch den neu installierten Sensorknoten, da diesem nunmehr die benötigten Informationen vorliegen, um mit den bereits existenten Sensorknoten in Verbindung zu treten.

Neben einer Information über die zeitliche Abweichung der jeweils internen Uhren von Sensorknoten in einem Netzwerk kann in derartigen Sensornetzwerken darüber hinaus die Problematik auftreten, dass z.B. aufgrund unterschiedlicher Umgebungsbedingungen bei den einzelnen Sensorknoten die jeweils internen Uhren nicht nur andere Zählerstände aufweisen, sondern insbesondere auch unterschiedliche Ganggeschwindigkeiten haben. Dementsprechend kann es bei Betrachtung zweier interner Uhren von jeweiligen Sensorknoten nicht nur zu einer Zeitabweichung, d.h. insbesondere Zählerstandsabweichung der jeweiligen Uhren kommen, sondern auch zu einer Gangabweichung, d.h. eine Geschwindigkeitsdifferenz bei den jeweiligen Uhren.

Gemäß einem weiteren erfindungsgemäß vorgesehenen bevorzugten Verfahrensschritt kann es demnach vorgesehen sein, dass in einem neu zu installierenden Sensorknoten, insbesondere in einer Tabelle, wenigstens eine Information über eine Gangabweichung zwischen den internen Uhren des neuen und wenigstens eines bereits vorhandenen Sensorknotens gespeichert wird, wobei es hier besonders bevorzugt vorgesehen sein kann, dass eine Ganggeschwindigkeit des jeweiligen Sensorknotens ermittelt wird aus wenigstens einer Messung des Abstands aufeinanderfolgender Synchronisationstelegramme dieses Sensorknotens mittels einer internen Uhr des Installationsgerätes und Vergleich des gemessenen Abstands mit einem Sollabstand.

Auf diese Art und Weise kann im Wesentlichen zu jedem Sensorknoten festgestellt werden, mit welcher Geschwindigkeit die jeweilige interne Uhr dieses betrachteten Sensorknotens läuft. So kann es durch eine Systemvorgabe, beispielsweise durch die Uhr des Installationsgerätes, bekannt sein, welcher Abstand zwischen zwei aufeinanderfolgend gesendeten oder auch mehrerer Synchronisationstelegramme bestehen soll.

Ist der konkret gemessene Abstand dieser Synchronisationstelegramme geringer, so wird die interne Uhr dieses betrachteten Sensorknotens schneller laufen als gewünscht, ist der Abstand jedoch größer, so wird diese Uhr langsamer laufen als gewünscht. Es kann somit ein Rückschluss gezogen werden auf die Ganggeschwindigkeit der internen Uhr des Sensorknotens und so bei einer Feststellung derselben Information zu einem anderen Sensorknoten auf eine Gangabweichung der internen Uhren dieser beiden betrachteten Sensorknoten geschlossen werden.

Gemäß des erfindungsgemäßen Verfahrens kann es sodann bevorzugt vorgesehen sein, dass eine Zeitabweichung und/oder Gangabweichung der internen Uhren zwischen einem neu installierten Sensorknoten und wenigstens einem bereits bestehenden Sensorknoten vom Installationsgerät oder vom neu installierten Sensorknoten in den neu zu installierenden Sensorknoten und besonders bevorzugt auch in den wenigstens einen bestehenden Sensorknoten übertragen wird. Hierdurch wird, wie bereits oben beschrieben, auch eine Kommunikation der Sensorknoten in beide Richtungen ermöglicht.

Ersichtlich ist dabei auch, dass der Informationsgehalt, der bei einem Sensorknoten vorliegt, automatisch mit jedem neu installierten Sensorknoten steigt, da diese dann neu erhaltene Information über Zeitabweichungen und/oder Gangabweichungen zumindest in den einen neuen Sensorknoten, bevorzugt aber auch in alle übrigen, zumindest die im Empfangsgebiet des Installationsgebiet des Installationsgerätes liegenden Sensorknoten übertragen wird.

Üblicherweise ist es in einem Sensornetzwerk vorgesehen, dass in einem gewünschten Abstand die Sensorknoten Synchronisationstelegramme aussenden, um eine Kommunikation untereinander einzuleiten. Dieser Abstand wird normalerweise zur Energieeinsparung in einem bestimmten zeitlichen Bereich vorgegeben.

Um während der Installation, d.h. dem Aufbau eines neuen Sensornetzwerkes, möglichst schnell die nötigen Informationen zusammenzutragen, kann es dabei vorgesehen sein, dass nach einer Installation eines neuen Sensorknotens dieser eine Aussendung von Synchronisationstelegrammen betreibt, deren relativer Abstand gegenüber einem Normalbetrieb verkürzt ist, um hier eine schnelle Anpassung der Information im Installationsgerät mit Informationen über den neuen Sensorknoten und ggfs bereits installierte Sensorknoten zu erreichen.

Ein solcher Installationsbetrieb eines Sensorknotens mit verkürzter Periodendauer zwischen zwei Synchronisationstelegrammen kann z.B. durch einen Installateur manuell vorgegeben werden, beispielsweise auch durch Programmierung über das Installationsgerät oder es kann vorgesehen sein, dass ein neu zu installierender Sensorknoten mit erstmaliger Einschaltung in einen derartigen Betrieb automatisch verfällt und erst nach einer bestimmten Betriebszeit in einen Normalbetrieb übergeht.

Gemäß einer Weiterbildung des Verfahrens kann es vorgesehen sein, im Installationsgerät Informationen über alle im Empfangsbereich des Installationsgerätes befindlichen Sensorknoten gesammelt werden, wobei jedoch Informationen nur von daraus ausgewählten Sensorknoten zu einem neu zu installierenden Sensorknoten übertragen werden. Insbesondere diese Informationen können beispielsweise in eine Tabelle dieses neu zu installierenden Sensorknotens übertragen werden.

Es kann so bereits eine Vorselektion vorgenommen werden, beispielsweise auch durch den Installateur, der diese Auswahl gegebenenfalls beeinflussen kann, um mögliche Übertragungswege zwischen dem neuen Sensorknoten und bereits existierenden Sensorknoten festzulegen. Ersichtlich kann ein neu zu installierender Sensorknoten nur mit denjenigen anderen Sensorknoten des Netzwerkes kommunizieren, zu denen ihm entsprechende Informationen, also z.B. Informationen über Zeitabweichungen und/oder Gangabweichungen der jeweiligen Uhren anderer Sensorknoten übermittelt wurden.

Werden demnach nur ausgewählte Informationen zu bestimmten Sensorknoten an den neu zu installierenden Sensorknoten übertragen, so kann dieser neue Sensorknoten auch nur mit denjenigen Sensorknoten in Verbindung treten, von denen die entsprechenden Informationen stammen. Neben der Möglichkeit, die Auswahl durch den Installateur gegebenenfalls manuell vorzunehmen, kann es vorgesehen sein, dass das Installationsgerät gemäß vorgegebener Parameter die Auswahl intern vornimmt, beispielsweise anhand einer Bewertung der möglichen Übertragungswege zwischen dem neuen Sensorknoten und bereits existierenden Sensorknoten. Ebenso besteht die Möglichkeit, diese Auswahl gegebenenfalls durch einen neu zu installierenden Sensorknoten oder aber auch durch bereits existierende Sensorknoten vorzunehmen. Beispielsweise kann mittels eines Installationsgerätes oder einem im Netzwerk befindlichen Sensorknoten (Bestandsknoten oder neuer Knoten) eine Bewertung eines Übertragungsweges zwischen zwei Sensorknoten vorgenommen werden, beispielsweise anhand der Signalqualität. Es können sodann aus der Vielzahl aller empfangbarer Sensorknoten diejenigen ermittelt werden, zu denen die beste Empfangsqualität besteht und nur die Informationen zu diesen Knoten an den neuen Knoten und gegebenenfalls auch die Bestandsknoten übermittelt werden.

Neben den vorgenannten Informationen kann es im erfindungsgemäßen Verfahren auch vorgesehen sein, dass die Informationen im Installationsgerät und/oder einer Tabelle neben einer Zeitabweichung und/oder Gangabweichung auch Angaben über die hierarchische Ebene und/oder die Empfangsqualität mehrerer im Empfangsbereich des neuen Sensorknotens liegender anderer Sensorknoten umfasst. So können die Informationen, die in einem Sensorknoten vermittels des Installationsgerätes zusammengetragen werden, maßgeblich sein für den Aufbau und die Strukturierung des Netzes, beispielsweise weil durch diese Informationen die hierarchische Ebene eines neu zu installierenden Sensorknotens zumindest anfänglich festgelegt wird.

Wie bereits eingangs erwähnt, kann es hierbei vorgesehen sein, dass im Installationsgerät eine Kopie derjenigen Informationen vorgehalten werden, die in einen neuen Sensorknoten zu übertragen sind. Das Installationsgerät arbeitet demnach temporär genau so, wie ein neu zu installierender Sensorknoten und überträgt die Daten an denselbigen Sensorknoten nach dessen Inbetriebnahme. Insbesondere da das Installationsgerät mobil mit einem Techniker mitgeführt wird, befindet es sich in der unmittelbaren Umgebung eines neu zu installierenden Sensorknotens und hat demnach im Wesentlichen die identischen Empfangseigenschaften wie der neu zu installierende Sensorknoten, so dass wie vorbeschrieben zunächst durch das Installationsgerät die Umgebung nach Bestandsknoten abgehorcht werden kann, um sodann diese Informationen wie vorbeschrieben an den neuen Knoten zu übermitteln, ohne dass dieser für die Sammlung dieser nötigen Informationen irgendwelche Energie aufwenden muss. Die Informationen, die sodann in einem Sensorknoten vorliegen, beispielsweise in Form einer Tabelle, können sodann Zeitinformationen und ggfs. Sendewegsinformationen über mögliche Sendewege eines Sensorknotens umfassen. Dies ergibt sich im Wesentlichen daraus, dass Uhrinformationen (Zeitabweichung und/oder Gangabweichung) von denjenigen Sensorknoten in den Informationen umfasst sind, die im Empfangsbereich liegen und zum anderen diese Informationen einer weiteren Bewertung unterzogen werden können, so dass nur einige der möglichen Sensorknoten für eine Weiterleitung oder Absendung von Daten konkret benutzt werden.

Dies kann z.B. dadurch erfolgen, dass den Informationen ein Status beigeordnet werden kann, aus dem sich ergibt, ob zu dem betreffenden Sensorknoten, zu dem die entsprechende Information korreliert, eine Datenweiterleitung erfolgen soll oder nicht. Diese Statusbeiordnung kann wie vorgenannt anhand einer Einschätzung der Empfangsqualität zwischen zwei betrachteten Sensorknoten ermittelt werden.

So kann es z.B. vorgesehen sein, dass ohne Beschränkung der Erfindung auf diese Ausführung bei Informationen zu insgesamt 10 Sensorknoten eine tatsächliche Datenübertragung nur zu denjenigen Sensorknoten erfolgt, die eine über einer bestimmten Schwelle liegende Empfangsqualität aufweisen, so dass von den 10 insgesamt betrachteten Sensorknoten gegebenenfalls nur 3 für die tatsächliche Datenweiterleitung berücksichtigt werden.

Insbesondere kann es im Rahmen der Erfindung vorgesehen sein, dass eine derartige initial durch ein Installationsgerät zur Verfügung gestellte Informationsansammlung, beispielsweise in Form einer Tabelle, dynamisch änderbar ist, beispielsweise dadurch, dass sich neue Informationen ergeben, beispielsweise dadurch, dass sich Empfangsqualitäten ändern oder gegebenenfalls ein Sensorknoten ausfällt oder Ganggeschwindigkeiten der internen Uhren ändern oder das Installationsgerät vom Installateur in andere Empfangsgebiete getragen wird, in denen sich die Empfangsbedingungen geändert haben.

Ein Ausführungsbeispiel der Erfindung wird anhand der nachfolgenden Figur näher beschrieben.

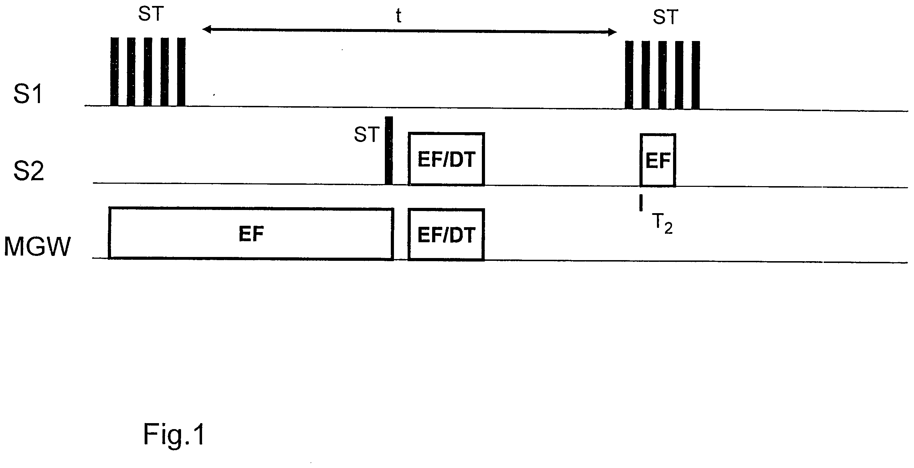

Die Figur 1 zeigt in schematischer Darstellung den Austausch von nötigen Informationen zwischen einem bestehenden Sensorknoten S1 und einem neu zu installierenden Sensorknoten S2, wobei diese Installation unter Zuhilfenahme eines Installationsgerätes MGW (Mobile Gateway) vorgenommen wird.

Im Beispiel wird davon ausgegangen, dass von einem Installateur zunächst beim Aufbau eines Sensornetzwerkes ein erster Sensorknoten S1 in Betrieb genommen wird. Dieser Sensorknoten wird sodann in periodischen Abständen t wenigstens ein Synchronisationstelegramm ST, im vorliegenden Fall einen Burst, d.h. eine Gruppe von fünf Synchronisationstelegrammen ST, aussenden. Der periodische Abstand t kann hierbei gegenüber einem Normalbetrieb dieses ersten Sensorknotens reduziert sein, um eine möglichst schnelle Informationsweitergabe beim Aufbau des Sensornetzwerkes zu erzielen.

Wird nun von dem Installateur an einem anderen Ort ein weiterer Sensorknoten S2 installiert, so kann dieser beispielsweise ebenso ein oder auch mehrere Synchronisationstelegramme ST aussenden, um sich in das bestehende Netzwerk (zu diesem Zeitpunkt nur mit dem Knoten S1) anzumelden und einzugliedern, was vermittels des Installationsgerätes MGW erfolgt.

Erkennbar ist hier, dass im Installationsbetrieb das Installationsgerät MGW ein Empfangsfenster öffnet, welches derart lang ist, dass es die Möglichkeit bietet, innerhalb der zeitlichen Dauer dieses Empfangsfensters Synchronisationstelegramme sowohl von bereits im Netz bestehenden Netzknoten, hier dem Sensorknoten S1 als auch von dem neu zu installierenden Sensorknoten S2 zu empfangen.

Dies ist in der Figur 1 erkennbar daran, dass bezogen auf die Zeitachse ein Überlapp des Empfangsfensters EF sowohl mit dem einen Synchronisationstelegramm ST des Knotens S2 als auch bezüglich der letzten beiden Synchronisationstelegramme ST des Sensorknotens S1 besteht. Es kann somit eine Information über die interne Uhr des Sensorknotens S1 über ein Synchronisationstelegramm ST oder auch ein hier nicht gezeigte separates Datentelegramm an das Installationsgerät MGW übertragen werden genauso wie eine Information über die interne Uhr des Sensorknotens S2 vermittels des einen empfangenen Synchronisationstelegramms ST dieses Knotens.

Anhand der jeweils gebildeten Differenzen bzw. Gangabweichungen zu der internen vorliegenden Uhr des Installationsgerätes MGW kann somit die jeweilige Zeit bzw. Gangabweichung zwischen den beiden betrachteten internen Uhren der Sensorknoten S1 und S2 bestimmt werden. Diese sodann erhaltene Information über die Zeit und Gangabweichung kann anhand eines Datentelegramms DT, welches das Installationsgerät MGW aussendet, an den neu zu installierenden Knoten S2 übermittelt werden, welcher hierfür nach Aussendung seines Synchronisationstelegramms ST ein entsprechendes Empfangsfenster EF geöffnet hat. Ebenso kann es hier vorgesehen sein, auch weitere Datentelegramme DT, z.B. Statusinformationen von dem Knoten S2 zum Installationsgerät zu übertragen.

Durch die neu erhaltene Information, d.h. hier insbesondere die nötigen Informationen über die Zeit- und Gangabweichungen der Uhren zwischen den beiden Sensorknoten S1 und S2 ist nunmehr der Sensorknoten S2 in die Lage versetzt, zur richtigen Zeit T2 ein Empfangsfenster EF zu öffnen, um in diesem Empfangsfenster ein Sensortelegramm des bereits im Netzwerk bestehenden Sensorknotens S1 zu empfangen und sodann mit diesem einen Datenaustausch zu betreiben, der bei der Figur 1 nicht weiter betrachtet wird.

Durch dieses erfindungsgemäße Verfahren ist der neu installierte Sensorknoten S2 in das bestehende Netzwerk, jetzt umfassend die Knoten S1 und S2 integriert, dass bedeutet, der Knoten S2 kann eine Kommunikation mit dem Knoten S1 vornehmen, um diesem z.B. Verbrauchsdaten zuzusenden.

Um ein Datenaustausch auch in der anderen Richtung, d.h. vom Knoten S1 zum Sensorknoten S2 vorzunehmen, kann es hier vorgesehen sein, wie im allgemeinen Teil erwähnt, dass eine Weiterleitung der notwendigen Informationen nicht nur zum neu installierten Sensorknoten S2 erfolgt, sondern auch zum bereits bestehenden Sensorknoten S1. So wird eine Kommunikation in beide Richtungen ermöglicht und das Sensornetzwerk kann nach weiterer Installation anderer Netzwerkknoten gegebenenfalls selbsttätig entscheiden, in welche Richtung ein Datenaustausch optimal ist, um die Daten von den Sensorknoten zu einer zentralen Datensammelstelle zu übersenden, welche auch durch einen der Sensorknoten des Netzwerkes gebildet werden kann.

Das hier beschriebene Ausführungsbeispiel ist nicht beschränkt auf die Installation von lediglich zwei Sensorknoten in einem Netzwerk, sondern wie zuvor beschrieben können auf dieselbe Art und Weise insbesondere iterativ weitere Sensorknoten S3, S4 etc. in das aufzubauende Sensornetzwerk hinzugefügt werden, wobei jedoch dann bei einem zu berücksichtigenden neuen Sensorknoten SN die jeweiligen Zeitabweichungen und bevorzugt Gangabweichungen von dessen internen Uhr zu allen internen Uhren der bereits bestehenden Sensorknoten S1 bis SN-1 bestimmt wird, sofern sich diese bestehenden Sensorknoten im Empfangsbereich des Installationsgerätes MGW befinden.

Es wird somit erkennbar, dass der Energieaufwand, der im Wesentlichen aus der zeitlich langen Öffnung eines Empfangsfensters resultiert, um die Synchronisationstelegramme von bestehenden Sensorknoten zu empfangen, im Wesentlichen vollständig auf das temporär eingesetzte Installationsgerät MGW abgewälzt wird, ohne die Energieressourcen der zu installierenden Sensorknoten signifikant anzugreifen. Es kann so mit energetisch minimalem Aufwand eine Erstkonfiguration eines neu aufzubauenden Sensornetzwerkes vorgenommen werden, wobei es sodann die Möglichkeit gibt, dass sich das Sensornetzwerk gemäß vorgebbarer Regeln und Protokolle selbst organisiert und die bis dahin vorliegenden Informationen aus der Erstinstallation automatisch und dynamisch geändert werden.

## Patentansprüche

1. Verfahren zum Aufbau eines Sensornetzwerkes mit mehreren Sensorknoten, wobei Sensorknoten zur Übermittlung von Sensordaten an einen zentralen Empfangsknoten miteinander in Verbindung treten können und wobei in jedem Sensorknoten Zeitinformationen, gespeichert sind von benachbarten im Empfangsgebiet eines Sensorknotens liegenden anderen Sensorknoten, anhand denen ein Sensorknoten bestimmt, wann er mit einem anderen Sensorknoten in Verbindung tritt, wobei durch die Zeitinformationen bestimmt ist, wann ein bestimmer Sensorknoten wenigstens ein Synchronisationstelegramm sendet und wann ein anderer Sensorknoten sein Empfangsfenster öffnen muss, um ein solches Synchronisationstelegramm zu empfangen und nach Aussendung wenigstens eines Synchronisationstelegrammes der sendende Sensorknoten für eine Zeitdauer auf Empfang geht, um innerhalb dieser Zeitdauer Telegramme empfangen zu können, die von umliegenden Sensorknoten ausgesendet werden, welche Daten an den Sensorknoten weiterleiten möchten, der das wenigstens eine Synchronisationstelegramm gesendet hat, **dadurch gekennzeichnet, dass** anfängliche Zeitinformationen in einem neu zu installierenden Sensorknoten (S2) gebildet werden durch Informationen aus einem mobilen Installationsgerät (MGW), die bei der Installation des neuen Sensorknoten (S2) in diesen übertragen werden, wobei die Zeitinformationen im Installationsgerät (MGW) automatisch angepasst werden anhand des Empfangs von Synchronisationstelegrammen (ST) von bereits im Sensornetzwerk installierten Sensorknoten (S1), die sich im Empfangsbereich des Installationsgerätes (MGW) befinden, wobei das Installationsgerät die Zeitinformationen aufgrund des Empfangs von bereits installierten Sensorknoten von diesen erhält und diese an den neu zu installierenden Sensorknoten übermittelt werden, ohne dass dieser in energetisch aufwändiger Weise tätig werden muss, um selbst die Informationen aus dem Empfang zu generieren.

2. Verfahren nach Anspruch 1, **dadurch gekennzeichnet, dass** in einem neu zu installierenden Sensorknoten (S2), insbesondere in einer Tabelle, wenigstens eine Information über eine Zeitabweichung zwischen den internen Uhren des neuen (S2) und wenigstens eines bereits vorhandenen Sensorknotens (S1) gespeichert wird, wobei eine Zeitabweichung ermittelt wird aus einer zeitlichen Differenz der internen Uhr des Installationsgerätes (MGW) zur internen Uhr wenigstens eines in dessen Empfangsgebiet bereits im Sensornetzwerk vorhandenen Sensorknotens (S1) und einer zeitlichen Differenz der internen Uhr des Installationsgerätes (MGW) zur internen Uhr des neu zu installierenden Sensorknoten (S2), wobei die Zeitabweichung nach deren Ermittlung in den neuen Sensorknoten (S2) übertragen wird.

3. Verfahren nach einem der vorherigen Ansprüche, **dadurch gekennzeichnet, dass** in einem neu zu installierenden Sensorknoten (S2), insbesondere in einer Tabelle, wenigstens eine Information über eine Gangabweichung zwischen den internen Uhren des neuen (S2) und wenigstens eines bereits vorhandenen Sensorknotens (S1) gespeichert wird, wobei eine Ganggeschwindigkeit des jeweiligen Sensorknotens (S1,S2) ermittelt wird aus wenigstens einer Messung des Abstandes aufeinander folgender Synchronisationstelegramme (ST) dieses Sensorknotens (S1,S2) mittels einer internen Uhr des Installationsgerätes (MGW) und Vergleich des gemessenen Abstandes mit einem Sollabstand.

4. Verfahren nach einem der vorherigen Ansprüche, **dadurch gekennzeichnet, dass** eine Zeitabweichung und/oder Gangabweichung zwischen einem neu installierten Sensorknoten (S2) und wenigstens einem bereits bestehenden Sensorknoten (S1) vom Installationsgerät (MGW) und/oder vom neu installierten Sensorknoten (S2) in den wenigstens einen bestehenden Sensorknoten (S1) übertragen wird, insbesondere um eine Kommunikation zwischen den Sensorknoten (S1,S2) in beide Richtungen zu ermöglichen.

5. Verfahren nach einem der vorherigen Ansprüche, **dadurch gekennzeichnet, dass** nach einer Installation eines neuen Sensorknotens (S2) dieser eine Aussendung von Synchronisationstelegrammen (ST) betreibt, deren relativer Abstand gegenüber einem Normalbetrieb verkürzt ist, um eine Anpassung der Informationen im Installationsgerät (MGW) mit Informationen über den neuen Sensorknoten (S2) zu erhalten.

6. Verfahren nach einem der vorherigen Ansprüche, **dadurch gekennzeichnet, dass** im Installationsgerät Information über alle im Empfangsbereich des Installationsgerätes befindlichen Sensorknoten gesammelt werden, wobei Informationen von daraus ausgewählten Sensorknoten an einen neu zu installierenden Sensorknoten übertragen werden, um Informationen, insbesondere eine Tabelle dieses Sensorknotens zu bilden.

7. Verfahren nach Anspruch 6, **dadurch gekennzeichnet, dass** eine Auswahl anhand einer Bewertung der möglichen Übertragungswege zwischen dem neuen Sensorknoten und den existierenden Sensorknoten erfolgt.

8. Verfahren nach einem der vorherigen Ansprüche, **dadurch gekennzeichnet, dass** die Informationen im Installationsgerät (MGW) und/oder einer Tabelle neben einer Zeitabweichung und/oder Gangabweichung Angaben über die hierarchische Ebene und/oder die Empfangsqualität mehrerer im Empfangsbereich des neuen Sensorknotens (S2) liegender anderen Sensorknoten umfasst (S1).

9. Verfahren nach einem der vorherigen Ansprüche, **dadurch gekennzeichnet, dass** die Informationen im Installationsgerät (MGW) eine Kopie von in einen neuen Sensorknoten (S2) zu übertragenden Informationen, insbesondere eine Kopie einer zu übertragenden Tabelle bilden.

10. Verfahren nach einem der vorherigen Ansprüche, **dadurch gekennzeichnet, dass** die Informationen, insbesondere eine Tabelle SendewegsInformationen über mögliche Sendewege eines Sensorknotens (S2) umfasst.

## Claims

1. Method for setting up a sensor network having a plurality of sensor nodes, wherein sensor nodes can be connected to one another for the purpose of transmitting sensor data to a central reception node, and wherein each sensor node stores time information relating to other adjacent sensor nodes in the reception area of a sensor node, on the basis of which information a sensor node determines when it is connected to another sensor node, wherein the time information determines when a particular sensor node transmits at least one synchronization message and when another sensor node must open its reception window in order to receive such a synchronization message, and, after emitting at least one synchronization message, the transmitting sensor node changes to reception for a period in order to be able to receive messages within this period which are emitted by surrounding sensor nodes wishing to forward data to that sensor node which transmitted the at least one synchronization message, **characterized in that** initial time information is formed in a sensor node (S2) to be newly installed from information from a mobile installation device (MGW), which information is transmitted to the new sensor node (S2) during the installation of the latter, wherein the time information in the installation device (MGW) is automatically adapted on the basis of the reception of synchronization messages (ST) from sensor nodes (S1) which are already installed in the sensor network and are in the reception area of the installation device (MGW), wherein the installation device receives the time information from sensor nodes which are already installed on account of the reception by the latter and this time information is transmitted to the sensor node to be newly installed without the latter having to become active in an energy-consuming manner in order to itself generate the information from the reception.

2. Method according to Claim 1, **characterized in that** a sensor node (S2) to be newly installed stores, in particular in a table, at least one item of information relating to a time deviation between the internal clocks of the new sensor node (S2) and of at least one sensor node (S1) which is already present, wherein a time deviation is determined from a time difference between the internal clock of the installation device (MGW) and the internal clock of at least one sensor node (S1) already present in the reception area thereof in the sensor network and from a time difference between the internal clock of the installation device (MGW) and the internal clock of the sensor node (S2) to be newly installed, wherein the time deviation is transmitted to the new sensor node (S2) after it has been determined.

3. Method according to one of the preceding claims, **characterized in that** a sensor node (S2) to be newly installed stores, in particular in a table, at least one item of information relating to a rate deviation between the internal clocks of the new sensor node (S2) and of at least one sensor node (S1) which is already present, wherein a rate of the respective sensor node (S1, S2) is determined from at least one measurement of the interval between successive synchronization messages (ST) from this sensor node (S1, S2) by means of an internal clock of the installation device (MGW) and comparison of the measured interval with a desired interval.

4. Method according to one of the preceding claims, **characterized in that** a time deviation and/or a rate deviation between a newly installed sensor node (S2) and at least one sensor node (S1) which already exists is transmitted by the installation device (MGW) and/or by the newly installed sensor node (S2) to the at least one existing sensor node (S1), in particular in order to enable communication between the sensor nodes (S1, S2) in both directions.

5. Method according to one of the preceding claims, **characterized in that,** after a new sensor node (S2) has been installed, the latter emits synchronization messages (ST), the relative interval between which is shortened in comparison with normal operation in order to adapt the information in the installation device (MGW) using information relating to the new sensor node (S2).

6. Method according to one of the preceding claims, **characterized in that** information relating to all sensor nodes in the reception area of the installation device is collected in the installation device, wherein information is transmitted from sensor nodes selected therefrom to a sensor node to be newly installed in order to form information, in particular a table of this sensor node.

7. Method according to Claim 6, **characterized in that** a selection is made on the basis of an assessment of the possible transmission paths between the new sensor node and the existing sensor nodes.

8. Method according to one of the preceding claims, **characterized in that,** in addition to a time deviation and/or a rate deviation, the information in the installation device (MGW) and/or in a table comprises details of the hierarchical level and/or the reception quality of a plurality of other sensor nodes (S1) in the reception area of the new sensor node (S2).

9. Method according to one of the preceding claims, **characterized in that** the information in the installation device (MGW) forms a copy of information to be transmitted to a new sensor node (S2), in particular a copy of a table to be transmitted.

10. Method according to one of the preceding claims, **characterized in that** the information, in particular a table, comprises transmission route information relating to possible transmission routes of a sensor node (S2).

## Revendications

1. Procédé pour construire un réseau de capteurs comprenant plusieurs noeuds de capteur, les noeuds de capteur pouvant entrer en contact les uns avec les autres en vue de communiquer des données de capteur à un noeud récepteur central et dans chaque noeud de capteur étant enregistrées des informations de temps des autres noeuds de capteur voisins se trouvant dans la région de réception d'un noeud de capteur, au moyen desquelles un noeud de capteur détermine quand il entre en contact avec un autre noeud de capteur, les informations de temps permettant de déterminer à quel moment un noeud de capteur donné envoie au moins un télégramme de synchronisation et à quel moment un autre noeud de capteur doit ouvrir sa fenêtre de réception afin de recevoir un tel télégramme de synchronisation et après l'émission d'au moins un télégramme de synchronisation, le noeud de capteur émetteur passe en réception pendant une durée donnée afin de pouvoir recevoir, à l'intérieur de cette durée, des télégrammes qui sont envoyés par les noeuds de capteur environnants qui souhaitent retransmettre des données au noeud de capteur qui a envoyé l'au moins un télégramme de synchronisation, **caractérisé en ce que** des informations de temps initiales sont formées dans un nouveau noeud de capteur (S2) à installer par des informations en provenance d'un appareil d'installation (MGW) mobile, lesquelles sont transmises au nouveau noeud de capteur (S2) lors de l'installation de celui-ci, les informations de temps dans l'appareil d'installation (MGW) étant adaptées automatiquement à l'aide de la réception de télégrammes de synchronisation (ST) de noeuds de capteur (S1) déjà installés dans le réseau de capteurs, lesquels se trouvent dans la zone de réception de l'appareil d'installation (MGW), l'appareil d'installation obtenant les informations de temps de la part de noeuds de capteur déjà installés en raison de la réception de ceux-ci et celles-ci étant communiquées au nouveau noeud de capteur à installer sans qu'il soit nécessaire que celui-ci soit actif d'une manière énergétiquement coûteuse pour générer lui-même les informations à partir de la réception.

2. Procédé selon la revendication 1, caractérisé en qu'au moins une information à propos d'une dérive dans le temps entre les horloges internes du nouveau (S2) et d'au moins un noeud de capteur (S1) déjà présent est enregistrée dans un nouveau noeud de capteur (S2) à installer, notamment dans un tableau, une dérive dans le temps étant déterminée à partir d'une différence dans le temps entre l'horloge interne de l'appareil d'installation (MGW) et l'horloge interne d'au moins un noeud de capteur (S1) dans sa zone de réception déjà présent dans le réseau de capteurs et une différence de temps entre l'horloge interne de l'appareil d'installation (MGW) et l'horloge interne du nouveau noeud de capteur (S2) à installer, la dérive dans le temps étant transmise dans le nouveau noeud de capteur (S2) après avoir été déterminée.

3. Procédé selon l'une des revendications précédentes, **caractérisé en ce qu'**au moins une information à propos d'une dérive de marche entre les horloges internes du nouveau (S2) et d'au moins un noeud de capteur (S1) déjà présent est enregistrée dans un nouveau noeud de capteur (S2) à installer, notamment dans un tableau, une vitesse de marche du noeud de capteur (S1, S2) respectif étant déterminée à partir d'au moins une mesure de l'écart entre des télégrammes de synchronisation (ST) mutuellement successifs de ce noeud de capteur (S1, S2) au moyen d'une horloge interne de l'appareil d'installation (MGW) et de la comparaison de l'écart mesuré avec un écart de consigne.

4. Procédé selon l'une des revendications précédentes, **caractérisé en ce qu'**une dérive dans le temps et/ou une dérive de marche entre un nouveau noeud de capteur (S2) installé et au moins un noeud de capteur (S1) déjà existant est transmise de l'appareil d'installation (MGW) et/ou du nouveau noeud de capteur (S2) installé dans l'au moins un noeud de capteur (S1) existant, notamment en vue de permettre une communication entre les noeuds de capteur (S1, S2) dans les deux directions.

5. Procédé selon l'une des revendications précédentes, **caractérisé en ce qu'**après une installation d'un nouveau noeud de capteur (S2), celui-ci opère une émission de télégrammes de synchronisation (ST) dont l'écart relatif est raccourci par rapport à un fonctionnement normal afin d'obtenir une adaptation des informations dans l'appareil d'installation (MGW) avec des informations à propos du nouveau noeud de capteur (S2) .

6. Procédé selon l'une des revendications précédentes, **caractérisé en ce que** dans l'appareil d'installation sont collectées des informations à propos de tous les noeuds de capteur qui se trouvent dans la zone de réception de l'appareil d'installation, des informations étant transmises depuis des noeuds de capteur sélectionnés parmi ceux-ci à un nouveau noeud de capteur à installer afin de former des informations, notamment un tableau de ce noeud de capteur.

7. Procédé selon la revendication 6, **caractérisé en ce qu'**une sélection est effectuée à l'aide d'une évaluation des trajets de transmission possibles entre le nouveau noeud de capteur et les noeuds de capteur existants.

8. Procédé selon l'une des revendications précédentes, **caractérisé en ce que** les informations dans l'appareil d'installation (MGW) et/ou un tableau, outre une dérive dans le temps et/ou une dérive de marche, comporte des indications à propos du niveau hiérarchique et/ou de la qualité de réception de plusieurs autres noeuds de capteur (S1) qui se trouvent dans la zone de réception du nouveau noeud de capteur (S2).

9. Procédé selon l'une des revendications précédentes, **caractérisé en ce que** les informations dans l'appareil d'installation (MGW) forment une copie des informations à transmettre dans un nouveau noeud de capteur (S2), notamment une copie d'un tableau à transmettre.

10. Procédé selon l'une des revendications précédentes, **caractérisé en ce que** les informations, notamment un tableau, comprennent des informations de trajet à propos des trajets d'envoi possibles d'un noeud de capteur (S2).
